Europäisches Patentamt

European Patent Office

Office européen des brevets

(19)

(11) Veröffentlichungsnummer: **0 182 081**
**A2**

## (12) EUROPÄISCHE PATENTANMELDUNG

(21) Anmeldenummer: 85112959.3

(22) Anmeldetag: **12.10.85**

(51) Int. Cl.⁴: **B01J 41/04** , **B01J 47/04** , **C02F 5/00**

(30) Priorität: **10.11.84 DE 3441112**
      **20.07.85 DE 3526004**

(43) Veröffentlichungstag der Anmeldung:
      **28.05.86 Patentblatt 86/22**

(84) Benannte Vertragsstaaten:
      **AT CH DE FR LI**

(71) Anmelder: **Joh.A. Benckiser Wassertechnik GmbH**
      **Postfach 1140 Industriestrasse**
      **D-6905 Schriesheim(DE)**

(72) Erfinder: **Ensenauer, Peter**
      **Benzenklinge 5**
      **D-6932 Heddesbach(DE)**
      Erfinder: **Kruse, Ludwig-Claus, Dr. Dipl.-Chem.**
      **Schürhoffstrasse 21**
      **D-4600 Dortmund 41(DE)**

(74) Vertreter: **Patentanwälte Dr. Ing. Eugen Maier Dr.**
      **Ing. Eckhard Wolf**
      **Pischekstrasse 19**
      **D-7000 Stuttgart 1(DE)**

(54) **Verfahren zur Verhinderung von Korrosionsschäden in Wasserleitungsanlagen.**

(57) In Wasserleitungsanlagen mit feuerverzinkten oder mit kupferhaltigen Rohren wird das Wasser vor Eintritt in die Wasserleitungsanlage durch einen Anionenaustauscher geleitet, in welchem im Wasser enthaltene Nitrationen bzw. Sulfationen gegen Chloridionen ausgetauscht werden. Auf diese Weise kann in feuerverzinkten Rohrinstallationen Zinkgeriesel und in Kupferrohrinstallationen Lochkorrosion vermieden werden.

Nach einer anderen Ausgestaltung dieses Verfahrens wird in Wasserleitungsanlagen mit feuerverzinkten Rohren dem Nitrationen enthaltenden Wasser vor Eintritt in die Wasserleitungsanlage ein wasserlösliches Erdalkalichlorid und/oder -sulfat zugesetzt. Auf diese Weise kann Zinkgeriesel vermieden werden, ohne daß Abwasser entsteht, das den Vorfluter mit Salz belasten könnte.

EP 0 182 081 A2

Verfahren zur Verhinderung von Korrosionsschäden in Wasserleitungsanlagen

Die Erfindung betrifft ein Verfahren zur Verhinderung von Korrosionsschäden in Wasserleitungsanlagen der im Oberbegriff der Ansprüche 1,3 und 10 angegebenen Gattung.

In Wasserleitungsanlagen kann es aus verschiedenen Ursachen zu unerwünschten Korrosionserscheinungen kommen. Im Falle von feuerverzinkten Stahlrohren findet bei Kontakt mit Wasser zwangsläufig eine Korrosion statt, in deren Verlauf Zinkionen aus der Verzinkungsschicht an das Wasser abgegeben werden und sich allmählich eine Schutzschicht aus Zink- und Eisenkorrosionsprodukten aufbaut. Erwünscht ist hierbei ein gleichmäßiger Flächenabtrag. Je nach Wasserbeschaffenheit und Aufbau der Verzinkungsschicht im Rohrmaterial kann es jedoch zu einer selektiven Korrosion kommen, die vorzugsweise an den Korngrenzen fortschreitet und zum Ablösen von Zinkhydroxid, Zinkoxid, basischem Zinkcarbonat und metallischem Zink führt, das als Zinkgeriesel mit sandartiger Konsistenz in Erscheinung tritt. Bisher wurde vor allem versucht, das Zinkgeriesel von vornherein durch die Verwendung normgerecht verzinkter Rohre mit hoher Oberflächengüte zu vermeiden, allerdings nicht immer mit dem erwünschten Erfolg. Zur Heilung von bereits durch Zinkgeriesel befallenen Rohrleitungsanlagen wurde bereits vorgeschlagen, dem Wasser Ortho- oder Poly-phosphate zuzufügen. Auch hierbei wurden nur Teilerfolge erzielt.

Bei Kupferinstallationen ist in bestimmten Wasserversorgungsgebieten eine Häufung von Wanddurchbrüchen als Folge von Lochkorrosion festzustellen, die gleichfalls auf eine bestimmte Abhängigkeit von der Wasserbeschaffenheit schließen läßt.

Der Erfindung liegt daher die Aufgabe zugrunde, ein Verfahren zu entwickeln, mit welchem die auf die Wasserbeschaffenheit zurückzuführenden unerwünschten Korrosionserscheinungen in Wasserleitungsanlagen sowohl mit feuerverzinkten als auch mit kupferhaltigen Installationsrohren vermieden werden können.

Zur Lösung dieser Aufgabe werden die in den Patentansprüchen 1,3 und 10 angegebenen Merkmalskombinationen vorgeschlagen. Weitere vorteilhafte Ausgestaltungen und Weiterbildungen der Erfindung ergeben sich aus den Unteransprüchen.

Die erfindungsgemäße Lösung macht von der Erkenntnis Gebrauch, daß im Falle der feuerverzinkten Stahlrohre bei Wässern mit einem überdurchschnittlich hohen Nitratgehalt von 0,3 bis 1,5 mol/m³ as Korrosionsgeschehen derart verändert wird, daß der Abtrag nicht mehr gleichförmig sondern nur noch bevorzugt an den Korngrenzen erfolgt, mit dem Ergebnis, daß es zu dem vorstehend beschriebenen unerwünschten Zinkgeriesel kommt. Bei Anwesenheit hoher Chloridgehalte wird dieser Effekt nicht beobachtet.

Ausgehend von diesen Feststellungen wird zur Verhinderung von Korrosionsschäden durch selektive Korrosion in Wasserleitungsanlagen mit feuerverzinkten Rohren nach der Erfindung vorgeschlagen, daß das Wasser vor Eintritt in die Wasserleitungsanlage durch einen Anionenaustauscher geleitet wird, in welchem im Wasser enthaltene Nitrationen auf einen Gehalt unter 0,5 mol/m³, vorzugsweise unter 0,2 mol/m³ gegen Chloridionen ausgetauscht werden.

Im Falle von Kupferrohrinstallationen wurde experimentell festgestellt, daß die Lochkorrosion durch das Vorhandensein von Sulfationen begünstigt und durch Chloridionen gehemmt wird. Dieser Effekt tritt verstärkt bei einem Sulfatgehalt oberhalb 1 mol/m³ Wasser ein. Zu Verhinderung dieser Korrosionsschäden wird nach der Erfindung vorgeschlagen, daß das Wasser vor Eintritt in die Wasserleitungsanlage durch einen Anionenaustauscher geleitet wird, in welchem im Wasser enthaltene Sulfationen auf einen Gehalt unter 1 mol/m³, vorzugsweise unter 0,5 mol/m³ gegen Chloridionen ausgetauscht werden.

Da die Nitrate und Sulfate in den kritischen Konzentrationen vornehmlich in harten Grundwässern auftreten, für die zugleich eine Wasserenthärtung zur Vermeidung von Schäden durch Steinbildung in der Wasserleitungsanlage sinnvoll ist, wird gemäß einer bevorzugten Ausgestaltung der Erfindung vorgeschlagen, daß das Wasser vor Eintritt in die Wasserleitungsanlage durch einen Mischaustauscher geleitet wird, der aus einem Nitrat- und/oder Sulfatselektiven, Chlorid-beladenen Anionenaustauschermaterial und einem Calcium- und/oder Magnesium-selektiven, Natrium-beladenen Kationenaustauschermaterial besteht. Als besonders vorteilhaft hat sich hierbei ein Volumenanteil von 10 bis 50 % Anionenaustauschermaterial und von 90 bis 50 % Kationenaustauschermaterial im Mischaustauscher erwiesen. Um einen bestimmten Mindesthärtegrad einzustellen, kann das aus dem Mischaustauscher austretende Wasser vor Eintritt in die Wasserleitungsanlage mit von dem Mischaustauscher abgezweigtem Wasser verschnitten werden. Bei diesem Verschnitt ist darauf zu achten, daß die erfindungsgemäßen Grenzwerte des Nitrat- bzw. Sulfatanteils im Wasser nicht überschritten werden.

Eine weitere Verbesserung im Korrosionsverhalten kann dadurch erzielt werden, daß das aus dem Mischaustauscher austretende, gegebenenfalls verschnittene Wasser vor Eintritt in die Wasserleitungsanlage mit Phosphationen versetzt wird. Bei dem enthärteten Wasser ist ferner eine Alkalisierung des Wassers auf pH-Werte zwischen 7,5 und 8 möglich, ohne daß es zu Kalkausscheidungen kommt. Als alkalisierende Stoffe kommen beispielsweise Natriumcarbonat, Natriumsilicat, Trinatriumphosphat oder Natronlauge in Betracht. Diese pH-Wert-Anhebung stellt eine zusätzliche wirksame korrosionshemmende Maßnahme dar.

Nach einer weiteren vorteilhaften Ausgestaltung der Erfindung wird zur Verhinderung von Korrosionsschäden durch selektive Korrosion in Wasserleitungsanlagen mit feuerverzinkten Rohren vorgeschlagen, daß dem Nitrationen enthaltenden Wasser vor Eintritt in die Wasserleitungsanlage ein wasserlösliches Erdalkalichlorid und/oder -sulfat zugesetzt wird. Vorzugsweise kommen hierbei $MgCl_2$, $CaCl_2$ und $MgSO_4$ in Betracht.

Aufgrund des niedrigen Atomgewichts und der Zweiwertigkeit von Magnesium ist der den Korrosionsschutz begründende Chloridanteil in Magnesiumchlorid besonders hoch. Die Salzbelastung des Wassers kann daher relativ gering gehalten werden. Da die Dosierung von Magnesiumchlorid in wässriger Lösung einen geringen apparativen Aufwand erfordert, kann eine nach dem erfindungsgemäßen Verfahren arbeitende Korrosionsschutzanlage mit niedrigen Investitionskosten realisiert werden. Obwohl bei Zugabe von Magnesiumchlorid in Wasser ein geringes Ansteigen der Gesamthärte festzustellen ist, wird das Härteabscheidungsverhalten des Wassers nicht ungünstig beeinflußt, da Magnesiumionen keine Härteausscheidungen bewirken. Weiter ist es von Vorteil, daß bei dieser Verfahrensweise im Gegensatz zum Ionenaustauschverfahren kein Abwasser entsteht, das den Vorfluter mit Salz belasten könnte.

Da einerseits eine ausreichende Korrosionsschutzwirkung erzielt und andererseits die Salzbelastung des Wassers möglichst gering gehalten werden soll, erfolgt der Zusatz an Magnesiumchlorid gemäß einer bevorzugten Ausgestaltung der Erfindung in dem Maße, daß das Wasser danach eine Chlorid-Molarität aufweist, die dem 2- bis 8-fachen, vorzugsweise dem 4-fachen der Nitrat-Molarität entspricht. Bei Verwendung von Magnesiumsulfat als Zusatz werden wegen der Zweiwertigkeit der Sulfationen die besten Ergebnisse bei einer Sulfat-Molarität erzielt, die dem 1- bis 4-fachen, vorzugsweise etwa dem 2-fachen der Nitrat-Molarität entspricht.

Im folgenden wird die Erfindung anhand einiger Ausführungsbeispiele näher erläutert.

| | |
|---|---|
| pH-Wert | |
| Summe Erdalkalien | |
| Chlorid | |
| Sulfat | |
| Nitrat | |

Unmittelbar hinter dem Hauptventil am Eintritt der Hauswasserleitungsanlage wurde an einer für die Öffentlichkeit unzugänglichen Stelle ein Ionenaustauscher installiert, dessen Harzbehälter mit 20 l Anionenaustauscherharz (Amberlite Typ IRA-904 der Firma Rohm and

| | |
|---|---|
| pH-Wert | |
| Summe Erdalkalien | . |
| Chlorid | |
| Sulfat | |
| Nitrat | |

Bereits einen Monat nach der Installation des Ionenaustauschers war kein Zinkgeriesel mehr vorhanden.

Ausführungsbeispiel 2

In einer Wasserleitungsanlage mit feuerverzinkten Rohren eines Neubaus, die mit dem gleichen Wasser wie beim Ausführungsbeispiel 1 beaufschlagt wurde, trat trotz Normverzinkung starkes Zinkgeriesel auf.

Unmittelbar hinter dem Hauptventil am Eintritt der Wasserleitungsanlage wurde an einer für die Öffentlichkeit unzugänglichen Stelle eine handelsübliche Wasserenthärtungsanlage installiert, deren Ionenaustauscher-

| | |
|---|---|
| pH-Wert | |
| Summe Erdalkalien | |
| Chlorid | |
| Sulfat | |
| Nitrat | |

Ausführungsbeispiel 1

In einer Wasserleitungsanlage mit normgerecht feuerverzinkten Rohren eines Neubaus trat nach kurzer Zeit Zinkgeriesel auf. Eine Analyse des vom örtlichen Wasserwerk gelieferten Wassers ergab folgende Werte:

$$7{,}15$$
$$4{,}1 \ mol/m^3 \ (23 \ °d)$$
$$0{,}9 \ mol/m^3$$
$$0{,}3 \ mol/m^3$$
$$1{,}0 \ mol/m^3.$$

Haas) gefüllt wurde. Die Regeneration dieses Chloridbeladenen Anionenaustauschers erfolgte mittels Kochsalz. Die analytischen Daten des hinter dem Ionenaustauscher entnommenen Wassers waren wie folgt:

$$7{,}0$$
$$4{,}1 \ mol/m^3$$
$$2{,}32 \ mol/m^3$$
$$0{,}04 \ mol/m^3$$
$$0{,}1 \ mol/m^3.$$

behälter mit 10 l Kationenaustauscherharz (Amberlite IR 120 L der Firma Rohm and Haas) und 5 l Anionenaustauscherharz (Amberlite IRA 410) gefüllt wurde. Die Regeneration des Mischaustauschers erfolgte mittels Kochsalz. Die Enthärtungsanlage enthielt ferner eine Verschneidevorrichtung, in der das aus dem Ionenaustauscher austretende Wasser zur Anhebung der Wasserhärte auf einen vorgegebenen Wert mit vor dem Ionenaustauscher abgezweigtem Wasser verschnitten wurde. Die analytischen Werte des hinter dieser Anlage entnommenen Wassers waren wie folgt:

$$7{,}0$$
$$1{,}5 \ mol/m^3 \ (8{,}4 \ °d)$$
$$2{,}1 \ mol/m^3$$
$$0{,}04 \ mol/m^3$$
$$0{,}3 \ mol/m^3.$$

Etwa einen Monat nach Inbetriebnahme der Mischaustauscher-Anlage war kein Zinkgeriesel mehr festzustellen.

pH-Wert

Summe Erdalkalien

Chlorid

Sulfat

Unmittelbar hinter dem Hauptventil am Eintritt der Wasserleitungsanlage wurde an einer für die Öffentlichkeit unzugänglichen Stelle eine handelsübliche Enthärtungsanlage mit Ionenaustauscher installiert, deren Harzbehälter mit 15 l Kationenaustauscherharz (Amberlite Typ IR 120 L) und 15 l Anionenaustauscherharz (Amberlite Typ IRA 410) nach inniger Durchmischung befüllt wurde. Die Regeneration des Mischaustauschers erfolgte mittels Kochsalz. Die

pH-Wert

Summe Erdalkalien

Chlorid

Sulfat

Nach der Installation der Ionenaustauscheranlage ist in einem Zeitraum von 1 1/2 Jahren kein weiterer Rohrdurchbruch mehr erfolgt. Dieses Ergebnis wird vor allem auf die Reduzierung des Sulfatgehalts zurückgeführt. Die Alkalisierung auf höhere pH-Werte, die erst aufgrund der kombinierten Enthärtung möglich war, trug zusätzlich dazu bei, die Korrosionsanfälligkeit zu reduzieren.

pH-Wert

Summe Erdalkalien

Säurekapazität bis pH 4,3

Chlorid

Sulfat

Nitrat

Im Rahmen eines Pilotprojekts wurde eine Korrosionsschutzanlage gebaut, in der Magnesiumchlorid in wässrige Lösung gebracht und in dieser Form dem Rohwasser vor Eintritt in die Wasserleitungsanlage zudosiert wurde. Die

Ausführungsbeispiel 3

In einer Wasserleitungsanlage mit Kupferrohrinstallation eines fünf Jahre alten Mehrfamilienhauses traten mehrfach Rohrbrüche aufgrund von Lochkorrosion auf. Das aus dem örtlichen Wassernetz gelieferte Wasser hatte folgende Analysenwerte:

7,4

4,35 mol/m³ (24,4 °d)

2,0 mol/m³

2,27 mol/m³.

Enthärtungsanlage enthielt ferner eine Verschneidevorrichtung, in welcher das aus dem Mischaustauscher austretende Wasser mit vor dem Mischaustauscher abgezweigtem Wasser zur Einstellung eines vorgegebenen Härtegrads verschnitten wurde. Weiter wurde zur Anhebung des pH-Werts hinter der Enthärtungsanlage ein alkalisierendes Mittel (Natriumbicarbonat) zugesetzt. Die Analysenwerte des so behandelten Wassers waren wie folgt:

7,8

1,5 mol/m³ (8,4 °d)

6,5 mol/m³

0,78 mol/m³.

Ausführungsbeispiel 4

Bei einer zentralen Wasserversorgungsanlage mit einer Förderleistung von 1,2 Millionen m³ Wasser pro Jahr trat Zinkgeriesel auf. Eine Analyse des Wassers ergab folgende Werte:

7,26

3,3 mol/m³

5,5 mol/m³

0,4 mol/m³

0,2 mol/m³

0,5 bis 0,6 mol/m³.

Dosierung wurde auf eine Zugabe von 72 g Magnesiumchlorid pro m³ Wasser eingestellt. In dem hinter der Dosiereinrichtung entnommenen Wasser ergaben sich folgende Analysewerte:

| | |
|---|---|
| pH-Wert | 7,1 |
| Summe Erdalkalien | 4,0 mol/m³ |
| Säurekapazität bis pH 4,3 | 5,0 mol/m³ |
| Chlorid | 1,9 mol/m³ |
| Sulfat | 0,2 mol/m³ |
| Nitrat | 0,5 bis 0,6 mol/m³. |

Es stellte sich somit eine Chlorid-Molarität ein, die knapp dem 4-fachen der Nitrat-Molarität entsprach. 14 Tage nach der ersten Inbetriebnahme der Korrosionsschutzanlage war in den Wasserleitungen kein Zinkgeriesel mehr festzustellen.

Ausführungsbeispiel 5

Im Rahmen des gleichen Pilotprojekts wurde anstelle des Magnesiumchlorids Magnesiumsulfat in wässrige Lösung gebracht und in dieser Form dem Rohwasser vor Eintritt in die Wasserleitungsanlage zudosiert. Die Dosierung wurde auf eine Zugabe von 90 g Magnesiumsulfat pro m³ Wasser eingestellt. In dem hinter der Dosiereinrichtung entnommenen Wasser ergaben sich hierbei folgende Analysenwerte:

| | |
|---|---|
| pH-Wert | 7,1 |
| Summe Erdalkalien | ca. 4,0 mol/m³ |
| Säurekapazität bis pH 4,3 | ca. 5,0 mol/m³ |
| Chlorid | 0,4 mol/m³ |
| Sulfat | 0,95 mol/m³ |
| Nitrat | 0,5 bis 0,6 mol/m³ |

Es stellte sich also eine Sulfat-Molarität ein, die etwa dem 1,5- bis 2-fachen der Nitrat-Molarität entsprach. Kurze Zeit nach der ersten Inbetriebnahme der Dosiereinrichtung war kein Zinkgeriesel mehr in den Wasserleitungen festzustellen.

**Ansprüche**

1. Verfahren zur Verhinderung von Korrosionsschäden in Wasserleitungsanlagen mit feuerverzinkten Rohren, **dadurch gekennzeichnet,** daß das Wasser vor Eintritt in die Wasserleitungsanlage durch einen Anionenaustauscher geleitet wird, in welchem im Wasser enthaltene Nitrationen auf einen Gehalt unter 0,5 mol/m³ gegen Chloridionen ausgetauscht werden.

2. Verfahren nach Anspruch 1, **dadurch gekennzeichnet,** daß der Nitrationengehalt auf einen Wert unter 0,2 mol/m³ abgesenkt wird.

3. Verfahren zur Verhinderung von Korrosionsschäden in Wasserleitungsanlagen mit kupferhaltigen Rohren, **dadurch gekennzeichnet,** daß das Wasser vor Eintritt in die Wasserleitungsanlage durch einen Anionenaustauscher geleitet wird, in welchem im Wasser enthaltene Sulfationen auf einen Gehalt unter 1 mol/m³ gegen Chloridionen ausgetauscht werden.

4. Verfahren nach Anspruch 3, **dadurch gekennzeichnet,** daß der Sulfationengehalt auf einen Wert unter 0,5 mol/m³ abgesenkt wird.

5. Verfahren nach einem der Ansprüche 1 bis 4, **dadurch gekennzeichnet,** daß das Wasser durch einen Mischaustauscher geleitet wird, der aus einem Nitrat- und/oder Sulfat-selektiven Anionenaustauschermaterial und einem Calcium- und/oder Magnesium-selektiven Kationenaustauschermaterial besteht, wobei sowohl das Anionenals auch das Kationenaustauschermaterial mit NaCl regenerierbar ist.

6. Verfahren nach Anspruch 5, **dadurch gekennzeichnet,** daß der Mischaustauscher einen Volumenanteil von 10-50 % Anionenaustauschermaterial und von 90-50 % Kationenaustauschermaterial enthält.

7. Verfahren nach Anspruch 5 oder 6, **dadurch gekennzeichnet,** daß das aus dem Mischaustauscher austretende Wasser vor Eintritt in die Wasserleitungsanlage mit vor dem Mischaustauscher abgezweigtem Wasser verschnitten wird.

8. Verfahren nach einem der Ansprüche 5 bis 7, **dadurch gekennzeichnet,** daß das aus dem Mischaustauscher austretende, gegebenenfalls verschnittene Wasser vor Eintritt in die Wasserleitungsanlage mit Phosphaten versetzt wird.

9. Verfahren nach einem der Ansprüche 5 bis 8, **dadurch gekennzeichnet,** daß das aus dem Mischaustauscher austretende, gegebenenfalls verschnittene Wasser vor Eintritt in die Wasserleitungsanlage auf einen pH-Wert zwischen 7,5 und 8 alkalisiert wird.

10. Verfahren zur Verhinderung von Korrosionsschäden in Wasserleitungsanlagen mit feuerverzinkten Rohren, dadurch gekennzeichnet, daß dem Nitrationen enthaltenden Wasser vor Eintritt in die Wasserleitungsanlage ein wasserlösliches Erdalkalichlorid und/oder Erdalkalisulfat zudosiert wird.

11. Verfahren nach Anspruch 10, dadurch gekennzeichnet,daß der Erdalkalichloridzusatz in dem Maße erfolgt, daß das Wasser danach eine Chlorid-Molarität aufweist, die einem Mehrfachen der Nitrat-Molarität entspricht.

12. Verfahren nach Anspruch 11, dadurch gekennzeichnet,daß die Chlorid-Molarität dem 2- bis 8-fachen, vorzugsweise etwa dem 4-fachen der Nitrat-Molarität entspricht.

13. Verfahren nach einem der Ansprüche 10 und 13, dadurch gekennzeichnet, daß der Erdalkalisulfatzusatz in dem Maße erfolgt, daß das Wasser danach eine Sulfat-Molarität aufweist, die gleich oder größer als die Nitrat-Molarität ist.

14. Verfahren nach Anspruch 13, dadurch gekennzeichnet,daß die Sulfat-Molarität dem 1- bis 4-fachen, vorzugsweise etwa dem 2-fachen der Nitrat-Molarität entspricht.

15. Verfahren nach einem der Ansprüche 10 bis 14, dadurch gekennzeichnet, daß als Zusatz Magnesiumchlorid und/oder Magnesiumsulfat und/oder Calciumchlorid in wässriger Lösung dem Wasser zudosiert wird.

16. Verfahren nach einem der Ansprüche 10 bis 15, dadurch gekennzeichnet, daß bei einem Nitratgehalt des Wassers von 0,3 bis 0,8 mol/m³ eine solche Menge an Magnesiumchlorid und/oder Calciumchlorid zudosiert wird, daß der Chloridgehalt einen Wert zwischen 1,5 und 4 mol/m³ annimmt.

17. Verfahren nach einem der Ansprüche 10 bis 16, dadurch gekennzeichnet, daß bei einem Nitratgehalt des Wassers von 0,3 bis 0,8 mol/m³ eine solche Menge an Magnesiumsulfat zudosiert wird, daß der Sulfatgehalt einen Wert zwischen 0,6 und 2 mol/m³ annimmt.